Europäisches Patentamt

European Patent Office

Office européen des brevets

(19)

(11) Publication number: 0 147 027
A2

(12) **EUROPEAN PATENT APPLICATION**

(21) Application number: 84307370.1

(22) Date of filing: 26.10.84

(51) Int. Cl.⁴: **G 09 G 3/36**
**G 06 F 3/147**

(30) Priority: 08.11.83 GB 8329807

(43) Date of publication of application:
03.07.85 Bulletin 85/27

(84) Designated Contracting States:
AT BE CH DE FR IT LI NL SE

(71) Applicant: International Standard Electric Corporation
320 Park Avenue
New York New York 10022(US)

(72) Inventor: Crossland, William Alden
15 School Lane
Harlow Essex(GB)

(72) Inventor: Peters, Jack Rowland
The Pound House Great Cranfield
Near Dunmow Essex(GB)

(72) Inventor: Scarr, Robert Walter Alister
High Ends Lower Street
Stansted Essex(GB)

(72) Inventor: Ross, Peter William
40 Rainsford Road
Stansted Essex(GB)

(72) Inventor: Astorino, Frank
40 Maple Lane
Essex Falls New Jersey 07021(US)

(74) Representative: Vaufrouard, John Charles
ITT Patent Department UK Maidstone Road Foots Cray
Sidcup KentDA14 5HT(GB)

(54) Data terminal.

(57) A data terminal uses as its display device a liquid crystal display formed on one face of a thin silicon slice. The slice has formed in it the controlling circuitry, based on MOS devices, for the display and some at least of the associated circuitry. The control means also includes a microprocessor with its associated memories and interfaces.

EP 0 147 027 A2

./...

Croydon Printing Company Ltd.

Fig.10.

DATA TERMINALS

This invention relates to data terminals and other devices in which visual display devices (VDUs) are used.

According to the invention, there is provided a data terminal provided with a visual display unit (VDU), characterised in that the VDU is a liquid crystal display device formed on a silicon slice, drive circuitry for the display device and some at least of the other associated circuitry thereof are formed on the same silicon slice as is the display, control of the terminal is effected by a microprocessor having associated with it memory means, the memory means includes read-only memory (ROM) which contains, when the terminal is in use, programmes for the microprocessor and other relatively permanent data associated with the operation of the terminal, the memory means also includes random access memory (RAM) which contains, when the terminal is in use, non-permanent data such as data to be displayed by the VDU, and the terminal also has inputs via which the data to be displayed and other non-permanent data are received.

In order that the invention and its various other preferred features may be understood more easily, some embodiments thereof will now be described, by way of example only, with reference to the drawings, in which:-

Figures 1 to 9 show a variety of data terminals embodying the invention,

Figure 10 is a generalised circuit for the control arrangements for the device embodying the invention, and

Figure 11 is a flat screen embodying the invention.

The terminals to be described herein use liquid crystal displays (LCD) over silicon, and such devices are described, inter alia, in British Patent No.2079022 and European Patent Application No.83102714.9. Like all LCD displays except smectic, the information on the display needs to be continually refreshed. Each picture element (pel) of the display is separately addressable through a field effect transistor fabricated on the silicon backing slice. The arrangement and addressing mechanisms may follow the principles set out in European Patent Application No.83102712.3. The association of capacitance with the pel is advantageous as it maintains the voltage on the pel for longer than would otherwise be the case, thus reducing the refresh rate compared with what would otherwise be necessary. Compared with other LCD displays of the nematic or cholesteric variety, which are not on a silicon or similarly-performing backing layer, the requirements of the refreshing circuits are much less onerous and the maximum number of elements that can be addressed while not infinite is less severely limited. In this respect attention is directed to British Patent Application No.2113444.

As the display is over a single slice of single crystal silicon, its size is limited to a diameter of about 4". This limits the number of characters it is practicable to display without the addition of some form of optical magnification.

Dyed phase change liquid crystal displays give good contrast, but the pixel states are essentially binary and grey scale is difficult to achieve directly. However, a grey scale can be effectively simulated by what is called "ordered dither", which is a combination of space and time multiplexing over blocks of 4 x 4 pixels. Pixels alternate between black and white in time and space to give an average effect corresponding to grey level required.

Total VDU capability in flat panel data/text display and graphics can be achieved in displays only 3-4mm thick by combining a black-to-white transition in liquid crystal using a dyed electro-optical effect with an addressing matrix fabricated by standard MOS processing in a silicon wafer. The wafer becomes the back plane of the liquid crystal display cell. It carries both the MOS addressing matrix, with a transistor or transistors controlling the voltage on each picture element, and also provides all the peripheral MOS drive electronics back to serial data feed, so that only 10-15 connections are required for a display with 60,000 or more picture elements. The displays show 'print on paper' contrast, and have no viewing angle limitations. The technology can produce high resolution displays from 15mm$^2$ up to the full size of a silicon slice. In the former, resolutions greater than 10 lines/ mm are possible. The cost per character is low since most of the display drive electronics is fabricated into the slice during the matrix manufacturing process. Additionally other electronics associated can also be fabricated and interconnected on the slice, for example RAM, transistors, diodes and resistors. Normally the display is square or rectangular whereas the slice as cut from a silicon single crystal is approximately circular. The extreme edges of the wafer are not normally usable but segments remain between the display areas and the edges that are suitable for the integrated

- 4 -

circuit realisation of these other functions.

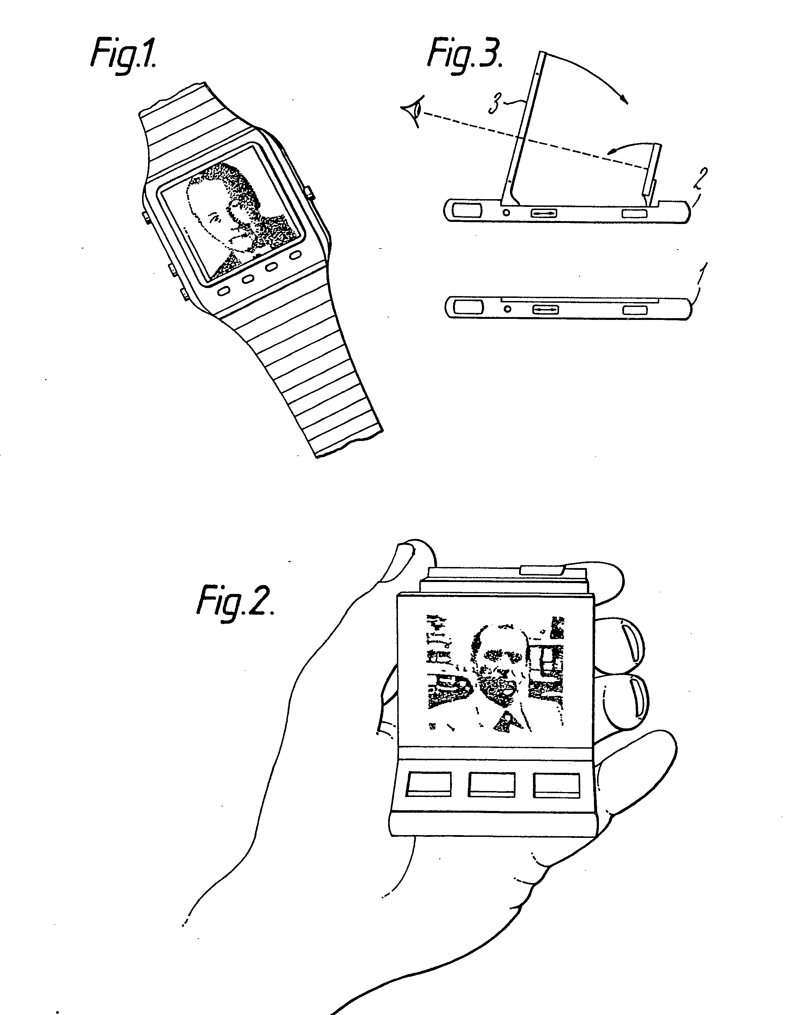

Figures 1 to 9 are examples of data terminals embodying the invention.

The arrangement shown in Figure 1 has a display about the same size as many wrist-watches. Its viewing distance is 20-25cm, and it gives an image on the retina which is about half the height of the image due to a standard TV set. The display has an area of $4\text{cm}^2$, with 200 lines, and has a scroll facility for text and zoom facility for a standard line video signal. The strap or bracelet includes receiver circuits, aerial and a battery, which may be partly integrated. Its input can be pager or TV receiver inputs, and it may have a miniature socket for an external programmer.

The device's functions include time/data, pager and message store, diary programmed by an external programmer, off-air Videotext with scroll, off-air TV with zoom, and edge controls for screen manipulation (scroll and zoom).

Figure 2 is a hand-held or "vest-pocket" data terminal whose viewing distance is 25-35cm, giving a retinal image as for a standard TV set. It can have a simple magnifier, as seen in Figure 3, in which the device is shown folded at 1 and opened at 2. The device 3 is a Fresnel magnifier, giving in one case a magnification of X2, of the image provided by the display device 4. This has very similar characteristics as for an image size, and facilities, etc., as the device of Figure 1.

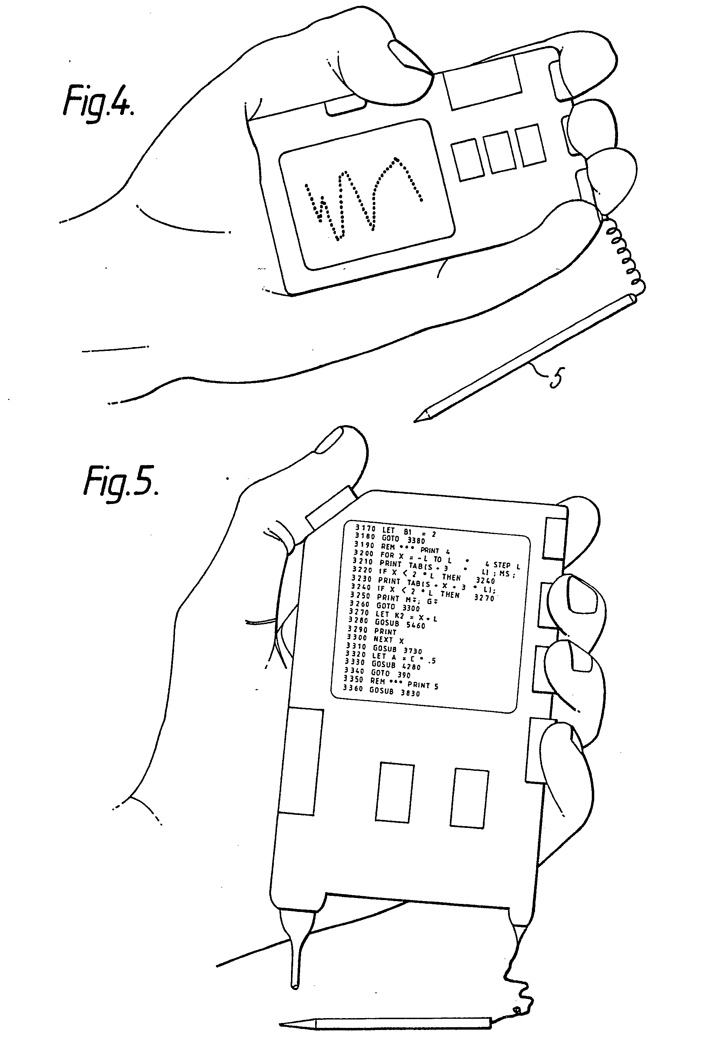

Figure 4 is another hand-held or "vest-pocket" terminal whose retinal image and viewing distance are as for Figure 2. However, it has an area of $12\text{cm}^2$, with 250 lines. It has the scroll and zoom facilities, and can accept standard line video systems. Its inputs are a ROM cartridge for data files or dedicated programmes, broadcast pager signals, videotext and TV, and an infra-red "light pen" 5 for data entry by "menu selection".

Its facilities are similar to those of Figures 1 and 2, but with the addition of business/scientific graphic calculator using pre-programming by ROM cartridge, and data/command entry with light pen. It also has "palm of hand" screen manipulator controls (scroll and zoom).

Figure 5 is a pocket data terminal which is in effect a somewhat enlarged version of the device of Figure 4. Its viewing distance is 35-40cm, with a retinal image as for a standard TV set. Its area is 16cm$^2$, with 250 lines, and it has scroll/zoom facilities, it accepts standard line video signals, and it has a light pen data tablet. Its scanning can include 32K RAM.

Its inputs are "Prestel-type" telephone connections, infra-red light pen data tablet through the display (used for data and command entry) ROM cartridge for files or dedicated programmes, broadcast pager signals, and videotext and TV. Its facilities are in the main as for Figure 4, with the addition of a "stand-alone" microcomputer capability.

Figure 6 shows a terminal 10 used as a "message label" for a telephone, the terminal being handset-mounted.

Figure 7 is another use of a terminal 11 in a telephone set, this time as a message unit/diary.

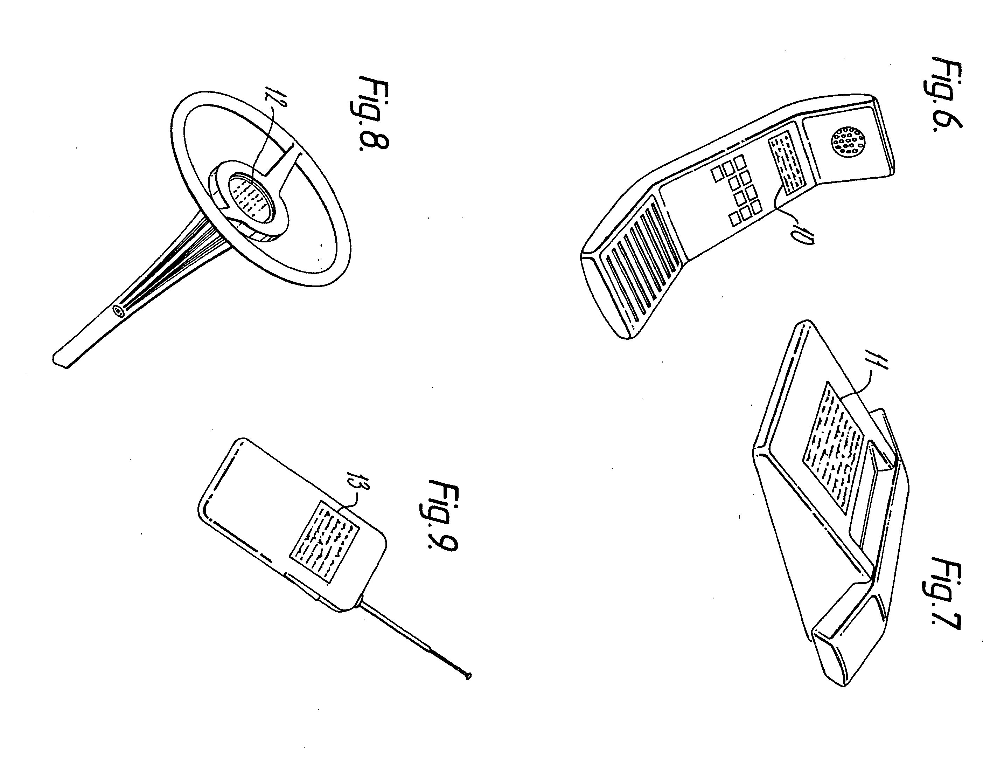

Figure 8 shows the use of a terminal 12 formed of a miniature display (1cm x 1cm) set in the end of a steering column of a car. This provides a message pad for the driver.

Figure 9 is a pager with a terminal 13 so that it can receive telex messages, and has soft vertical scroll for message extensions. This can display four

- 6 -

lines of text, each with twenty or thirty characters.

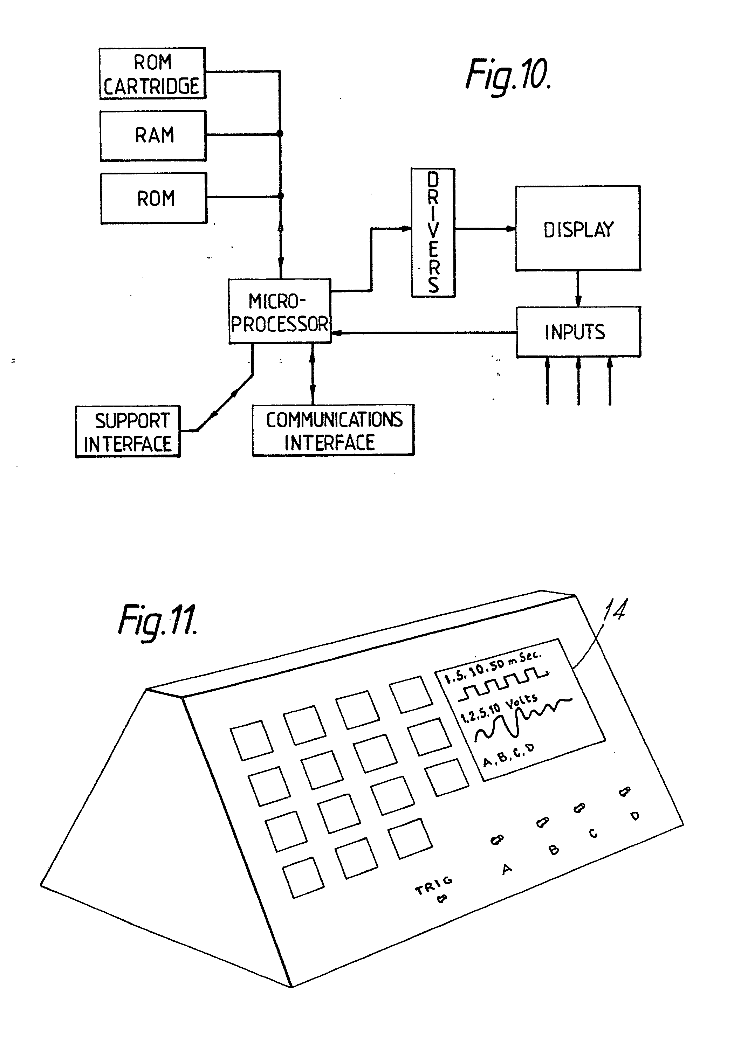

Figure 10 shows the system block diagram.

Figure 11 is a flat screen oscilloscope in which the display 14 is in effect a data terminal display. This has an area of 12-16cm$^2$, with up to 250 lines. It has the equivalent of four beams, with facilities for sample and hold, "menu selection" by button and screen legends, programmable, button functions, and external/internaltriggering.

Another application of a data terminal embodying the invention is as a helmet-mounted video instrument for a head-up display. Here we have a low bulk, 2cm x 2cm x 0.2cm, high-resolution flat panel display, projected to the wearer's (usually an aircraft pilot) natural viewing distance.

It will be appreciated that there are features common to all applications and other common to several. Rather than concentrating initially on specific applications therefore it is preferably to take a generic approach as far as the electronics (as opposed to the mechanics) is concerned and describe the component parts that go together to make a system.

These are (with reference to Figure 10) :

(a) The display panel. This is covered in general terms above, and detail follows the principles set out in the patent applications referred to above.

(b) Display drive electronics. This is organised as a general purpose module on a matrix basis, and realised as an LSI or VLSI circuit forming an integral part of the display silicon. Various specialised addressing schemes exist for use where there are specific constraints on the type of information to be displayed (e.g. oscilloscope waveforms).

(c) Control Processor. Control of the equipment uses a microprocessor and its associated memory, of the read only (ROM) and random access (RAM) variety.  The microprocessor is responsible for :

(i)   Providing the information to drive the supply and to format it (scroll, zoom etc.).

(ii) Dealing with inputs from keys, touch sensitive overlay and "light pen"-activated matrices.  This is by scanning and/or by interrupt.

(iii) Dealing with output to and input from the communications interface; the exact nature of the interface is application dependent.

(iv) Access to plug-in ROM cartridges when relevant.  This is a purely passive device within the address space of the processor.

(v)   Access to external processor for load of programmes and data and dump of data when relevant.

(vi) Running programmes stored in ROM and/or RAM to operate the unit.

(vii) Storing working data in RAM and in the display drive circuitry in some cases.

(d)   Inputs.  Inputs, dependent on applications, uses buttons, touch sensitive overlay, light pen and aerial in any combination.  These are conventional, with the possible exception of the light pen system, where there are three options:

(i)   An array of photo sensitive devices behind the display, the display itself being transparent at the infra-red frequencies used.

(ii) Photo sensitive devices built into the display itself.  These could be one per pixel or less (e.g. one per 4, 8 or 16 pixels).  Less, because the resolution required of the input is per character whereas the characters have to be built up from many individual pixel elements.  Such photo sensitive devices could be diodes or transistors involving a minority carrier conduction process.

In cases (i) and (ii) it is necessary to ensure that the display drive circuits are not adversely affected by illumination. The drive circuits are majority carrier devices (MOS) which are not as photosensitive as are minority carrier devices. Thicker metallisation over the drive circuit element (as opposed to the photo-sensitive element) can be used to increase the difference in sensitivity if necessary. (iii) Use is made of the photo-sensitivity of the display drive elements at infra-red. Display elements exposed to light pen radiation are discharged and the display drive matrix already provided can be scanned to detect such discharged elements, identifying the character in question. A character thus exposed to radiation disappears from the screen while being illuminated, giving positive feedback that the light pen (not in the visible spectrum) is working.

The drive circuits interface to the central processor through hardware from which the processor can determine the nature of the device, the type of signal and in the case of a matrix, the location.

(e) Communications Interface. This applies where data communication takes place across a defined and possibly standard interface. The interface provides the necessary level conversions, "handshake protocols and buffer data as appropriate to its functions". It is scanned by or interrupts the processor.

(f) Support Interface. This allows the terminal to be supported by an external processor (w.g. proprietary microprocessor system). The design of this interface is dependent on the interfaces that system supports. RS232, IBM 2780/3780 or Ethernet are some possibilities. When the support and communication interfaces use the same protocol they may be combined as one. The implementation of the support interface is similar to that of the communications interface.

(g) <u>Power Supplies</u>. The majority of applications demand internal batteries which can be of the primary (throw away) or secondary (rechargeable) type. In the latter case a socket will be provided for the connection of an external battery charger. For some applications, such as vehicles or telephone equipment, use can be made of an external (battery) supply.

CLAIMS:

1. A data terminal provided with a visual display unit (VDU), characterised in that the VDU is a liquid crystal display device (4, 14) formed on a silicon slice, drive circuitry for the display device and some at least of the other associated circuitry thereof are formed on the same silicon slice as is the display, control of the terminal is effected by a microprocessor having associated with it memory means, the memory means includes read-only memory (ROM) which contains, when the terminal is in use, programmes for the microprocessor and other relatively permanent data associated with the operation of the terminal, the memory means also includes random access memory (RAM) which contains, when the terminal is in use, non-permanent data such as data to be displayed by the VDU, and the terminal also has inputs via which the data to be displayed and other non-permanent data are received.

2. A data terminal as claimed in claim 1, characterised in that the terminal is mounted on a strap or bracelet which fits round a user's wrist, and the strap or bracelet also carries circuit elements and a battery.

3. A data terminal as claimed in claim 1, characterised in that the data terminal is a hand-held device in which the display (4) is hingedly supported, and the terminal has a Fresnel magnifier (3) which is also hingedly supported.

4. A data terminal as claimed in claim 1, 2 or 3, characterised in that the device has a light pen (5) for the input of information.

5. A data terminal as claimed in claim 1, characterised in that the terminal is part of a flat screen oscilloscope of which the liquid crystal display (14) is the screen.

Fig.1.

Fig.3.

Fig.2.

0147027

**Fig.4.**

**Fig.5.**

```
3170 LET  B1  = 2
3180 GOTO  3380
3190 REM ••• PRINT 4
3200 FOR X = - L TO L  •   4 STEP L
3210 PRINT TAB(S + 3  •     L) ; M$;
3220 IF X < 2 • L THEN   3240
3230 PRINT TAB(S + X • 3  • L);
3240 IF X < 2 • L THEN   3270
3250 PRINT M$; G$
3260 GOTO 3300
3270 LET K2 = X + L
3280 GOSUB 5460
3290 PRINT
3300 NEXT X
3310 GOSUB 3730
3320 LET A = C • .5
3330 GOSUB 4280
3340 GOTO 390
3350 REM ••• PRINT 5
3360 GOSUB 3830
```

Fig. 6.

Fig. 7.

11

10

Fig. 8.

Fig. 9.

12

13

Fig.10.

Fig.11.